(19) Europäisches Patentamt
European Patent Office
Office européen des brevets

(11) **EP 1 876 082 A2**

(12) **EUROPEAN PATENT APPLICATION**

(43) Date of publication:
**09.01.2008 Bulletin 2008/02**

(51) Int Cl.:
**B60W 20/00** (2006.01)   **B60W 30/18** (2006.01)
**B60W 10/08** (2006.01)   **B60W 10/26** (2006.01)

(21) Application number: **07252667.6**

(22) Date of filing: **02.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **03.07.2006 JP 2006183620**

(71) Applicants:
• **Hitachi, Ltd.**
  **Chiyoda-ku**
  **Tokyo 100-8280 (JP)**
• **Hitachi Mito Engineering Co., Ltd.**
  **Hitachinaka-shi**
  **Ibaraki 312-8506 (JP)**

(72) Inventors:
• **Ishida, Seiji**
  **c/o Hitachi Ltd., IP Group**
  **Tokyo 100-8220 (JP)**

• **Sato, Yutaka**
  **c/o Hitachi Ltd., IP Group**
  **Tokyo 100-8220 (JP)**
• **Miyauchi, Tsutomu**
  **c/o Hitachi Ltd., IP Group**
  **Tokyo 100-8220 (JP)**
• **Toyota, Eiichi**
  **c/o Hitachi Ltd., IP Group**
  **Tokyo 100-8220 (JP)**
• **Shimada, Motomi**
  **c/o Hitachi Ltd., IP Group**
  **Tokyo 100-8220 (JP)**
• **Nagasu, Masahiro**
  **c/o Hitachi Ltd., IP Group**
  **Tokyo 100-8220 (JP)**

(74) Representative: **Paget, Hugh Charles Edward et al**
**Mewburn Ellis LLP**
**York House**
**23 Kingsway**
**London WC2B 6HP (GB)**

(54) **Vehicle control unit, vehicle control method, and vehicle**

(57) The present invention provides an efficient operation utilizing regenerative energy, and also provides a maintenance-saving and low-cost vehicle control unit and a vehicle provided with the vehicle control unit. A vehicle control unit includes an ac motor (7) for driving a vehicle, an inverter (6) for converting a direct current into an alternating current of variable voltage and variable frequency to drive the ac motor (7), a brake chopper (4) formed by a series circuit consisting of a resistor (401) and a switching element (402) connected to the direct current side of the inverter (6), and an electricity storage device (5) connected to the direct current side of the inverter (6). Thereby, regenerative energy can be stored and utilized effectively. Also, when the electricity storage amount exceeds the upper limit, the regenerative energy can be consumed by the brake chopper (4), so that a mechanical brake (10) need not be used, and thereby the maintenance can be reduced.

FIG.1

EXAMPLE OF GENERAL CONFIGURATION (1)

**Description**

BACKGROUND OF THE INVENTION

Field of the Invention

The present invention relates to a vehicle control unit suitable for controlling a vehicle, a vehicle provided with the vehicle control unit, and a vehicle control method.

Description of the Related Art

On a generator-incorporated vehicle including an engine, a generator, an AC/DC converter, an inverter, and a motor, the vehicle speed is decreased by a braking method using a brake system or a method using an electrical brake (regenerative brake) in which the motor is used as a generator. In the case of the electrical brake, the generated electric power (regenerative power) is charged in an energy storage device such as a capacitor, and thereby the loss of energy can be reduced. Thereby, the regenerative energy obtained at the time of braking can be utilized effectively.

Japanese Patent Laid-Open No. 2003-134604 discloses an example of a vehicle in which the regenerative energy generated when a railway vehicle is braked by a regenerative brake is stored in a electricity storage device such as a battery and utilized effectively, by which the railway vehicle is operated with high efficiency.

In the method disclosed in Japanese Patent Laid-Open No. 2003-134604, when the electricity storage amount of the electricity storage device exceeds the upper limit, the regenerative energy cannot be charged any more. Therefore, it is necessary to perform braking by using a mechanical brake, limiting the use of the regenerative brake. Since the mechanical brake is braking means utilizing a frictional force, a brake shoe and the like are worn. Therefore, in the case where the mechanical brake is used frequently, there arises a problem in that the exchange period becomes short, and thereby the maintenance cost is increased. On the other hand, in the case providing with an electricity storage device having a capacity enough to store the regenerative energy, there arises a problem in that the cost and weight of electricity storage device increase.

An object of the present invention is to provide a vehicle control unit, and a vehicle, which can realize an efficient operation utilizing regenerative energy and achieve reduced maintenance and low cost.

SUMMARY OF THE INVENTION

A vehicle control unit in accordance with the present invention includes an ac motor for driving a vehicle, an inverter for converting a direct current into an alternating current of variable voltage and variable frequency to drive the ac motor, a brake chopper formed by a series circuit consisting of a resistor and a switching element connected to the direct current side of the inverter, and an electricity storage device connected to the direct current side of the inverter. Also, a vehicle in accordance with the present invention is mounted with the above-described vehicle control unit.

By providing the electricity storage device in this manner, the regenerative energy generated at the time of braking can be stored in the electricity storage device. Also, in the case where the electricity storage amount of the electricity storage device exceeds the upper limit, the regenerative energy can be consumed by the brake chopper, so that a mechanical brake need not be used.

According to the present invention, the regenerative energy generated at the time of braking is stored in the electricity storage device, and can be utilized effectively by being consumed when power runs short, for example, during acceleration or during vehicle stop, so that an efficient operation can be realized. Also, even in the case where the electricity storage amount of the electricity storage device exceeds the upper limit, the regenerative energy can be consumed by the brake chopper, so that a mechanical brake need not be used. Therefore, brake shoes etc. can be prevented from being worn, by which the maintenance can be reduced. Further, the capacity of the electricity storage device need not be increased excessively, so that a low-cost and lightweight vehicle control unit and a vehicle provided with the vehicle control unit can be realized.

BRIEF DESCRIPTION OF THE DRAWINGS

FIG. 1 is a block diagram showing an example of the general configuration in accordance with a first embodiment of the present invention;
FIG. 2 is a characteristic diagram showing an example of the characteristic of a second torque command in accordance with a first embodiment of the present invention;

FIG. 3 is a characteristic diagram showing an example of the characteristic of an electricity storage amount control section in accordance with a first embodiment of the present invention;

FIG. 4 is an explanatory diagram showing an example of the operation in accordance with a first embodiment of the present invention;

FIG. 5 is an explanatory view showing an example of the operation of an electricity storage device current and an electricity storage device current command in accordance with a first embodiment of the present invention;

FIG. 6 is a characteristic diagram showing another example of the characteristic of an electricity storage amount control section in accordance with a first embodiment of the present invention;

FIG. 7 is a block diagram showing an example of the general configuration in accordance with a second embodiment of the present invention;

FIG. 8 is an explanatory diagram showing an example of the operation in accordance with a second embodiment of the present invention;

FIG. 9 is a block diagram showing an example of the general configuration in accordance with a third embodiment of the present invention;

FIG. 10 is a characteristic diagram showing an example of the characteristic of an electricity storage amount control section in accordance with a third embodiment of the present invention;

FIG. 11 is an explanatory diagram showing an example of the operation in accordance with a third embodiment of the present invention; and

FIG. 12 is a block diagram showing an example of the general configuration in accordance with a fourth embodiment of the present invention.

## DETAILED DESCRIPTION OF THE PREFERRED EMBODIMENTS

Embodiments of the present invention will now be described with reference to the accompanying drawings.

Example 1

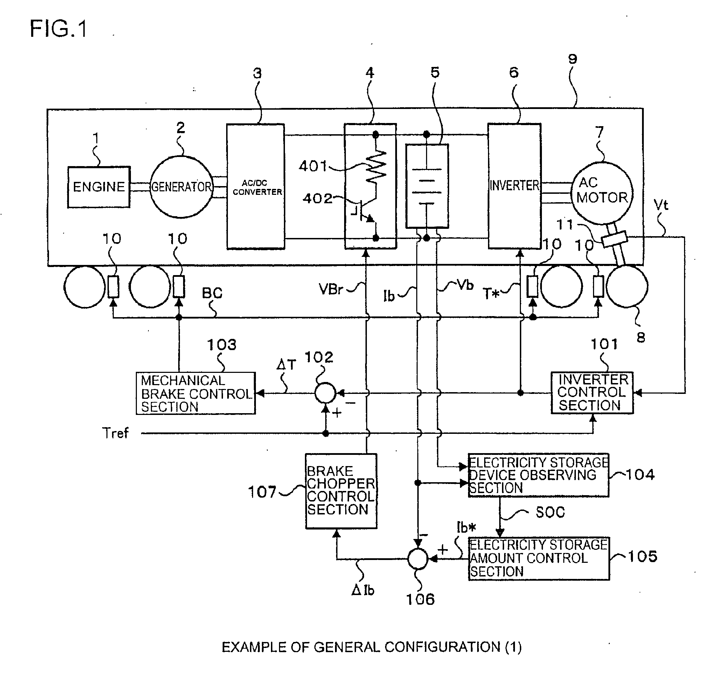

First, a first embodiment of the present invention is explained with reference to FIGS. 1 to 6. FIG. 1 shows an example of the general configuration in accordance with the first embodiment of the present invention. This example is configured so that an engine 1, a generator 2 connected to the engine 1, and an AC/DC converter 3 for converting the generated electric power into a direct current are connected in series, and on the direct current side of the AC/DC converter 3, a brake chopper 4, an electricity storage device 5, and an inverter 6 are connected in parallel. The brake chopper 4 is formed by a series circuit consisting of a resistor 401 and a switching element 402. Also, the electricity storage device 5 consists of a chargeable and dischargeable battery such as a lithium-ion battery. The inverter 6 is connected with an ac motor 7. By driving the ac motor 7, wheels 8 are driven to run a vehicle 9. The wheel 8 is provided with a mechanical brake 10, and the ac motor 7 is provided with a speed sensor 11. Also, there are provided an inverter control section 101 for controlling the inverter 6, a mechanical brake control section 103 for controlling the mechanical brake 10, an electricity storage amount control section 105 for controlling the electricity storage amount of the electricity storage device 5, and a brake chopper control section 107 for controlling the brake chopper 4 to carry out the control of each of the devices.

In this example, when the vehicle is accelerated, the generator 2 is driven by the engine 1, and the generated electric power is converted into a direct current by the AC/DC converter 3. The dc power converted by the AC/DC converter 3 is transmitted to the inverter 6. In the inverter 6, the direct current is converted into an alternating current to drive the ac motor 7, by which the wheels 8 are driven to run the vehicle 9. Also, at the time of braking, the ac motor 7 is operated as a generator to apply brake. The power generated by the ac motor 7 is input to the inverter 6, and in the inverter 6, the power is converted into a dc power and is stored in the electricity storage device 5.

Next, the processing of each of the control sections is explained. First, the processing of the inverter control section 101 is explained. The inverter control section 101 receives the speed Vt of the ac motor 7, which is detected by the speed sensor 11, and a first torque command Tref, and sends a second torque command T*. The first torque command Tref is a command sent from a host controller according to the notch signal of driver's cab and the speed.

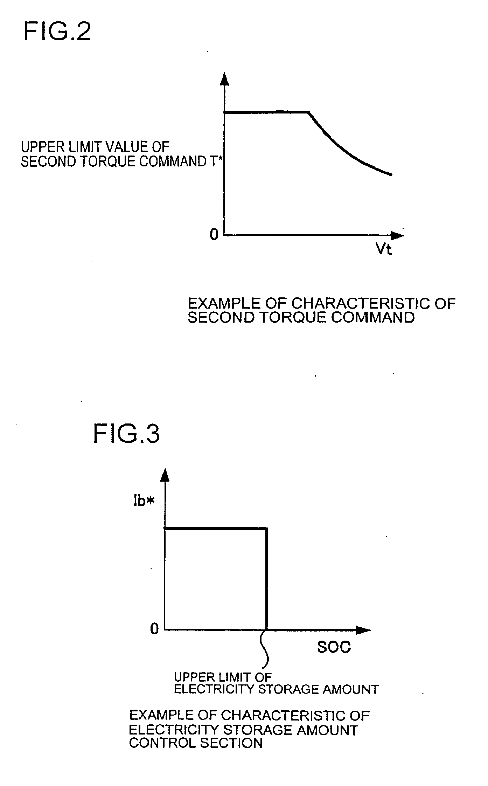

FIG. 2 shows a characteristic of the upper limit value of the second torque command T*. The inverter control section 101 determines the upper limit value of the second torque command T* using the speed Vt of the ac motor 7 and the characteristic shown in FIG. 2, limits the first torque command Tref by the determined upper limit value of the second torque command, and outputs the value as the second torque command T*. The inverter 6 converts the direct current into an alternating current of variable frequency and variable voltage to drive the ac motor 7 so that the second torque command T* sent from the inverter control section 101 and the output torque of the ac motor 7 coincide with each other.

Next, the processing of the mechanical brake control section 103 is explained. The mechanical brake control section 103 is configured so as to receive the output of a subtracter 102. The subtracter 102 receives the first torque command Tref sent from the host controller and the second torque command T* sent from the inverter control section 101, and subtracts the second torque command T* from the first torque command Tref to determine a torque difference $\Delta T$. The mechanical brake control section 103 carries out control so that the torque difference $\Delta T$ sent form the subtracter 102 and the braking force of the mechanical brake 10 coincide with each other.

Next, the processing of the electricity storage amount control section 105 and the brake chopper control section 107 is explained. First, an electricity storage device observing section 104 receives an electricity storage device voltage Vb and an electricity storage device current Ib of the electricity storage device 5, and estimates an electricity storage amount SOC. The electricity storage amount control section 105 receives the electricity storage amount SOC sent from the electricity storage device observing section 104, and sends an electricity storage device current command Ib* based on the electricity storage amount SOC. FIG. 3 shows the relationship between the electricity storage amount SOC and the electricity storage device current command Ib* sent from the electricity storage amount control section 105. In the case where the electricity storage amount SOC is not larger than the electricity storage amount upper limit, the electricity storage device current command Ib* is a rated current, and in the case where it exceeds the electricity storage amount upper limit, the electricity storage device current command Ib* is zero. The electricity storage device current command Ib* sent from the electricity storage amount control section 105 is fed into a subtracter 106. The subtracter 106 receives the electricity storage device current command Ib* and the electricity storage device current Ib, and subtracts the electricity storage device current Ib from the electricity storage device current command Ib* to output an electricity storage device current difference $\Delta Ib$. The brake chopper control section 107 receives the electricity storage device current difference $\Delta Ib$ sent from the subtracter 106, and calculates a conduction ratio VBr based on Equation (1):

$$VBr = -(Kp + Ki/s)\ \Delta Ib \qquad \ldots (1)$$

in which, Kp and Ki are control gains, and s is a differential operator.

The brake chopper 4 receives the conduction ratio VBr sent from the brake chopper control section 107, performs switching of the switching element 402 based on the conduction ratio VBr, and consumes electric power in the resistor 401. By controlling the electricity storage amount control section 105 and the brake chopper control section 107 in association with each other in this manner, in the brake chopper 4, an excess of regenerative power can be consumed so as not to exceed the electricity storage amount upper limit of the electricity storage device 5.

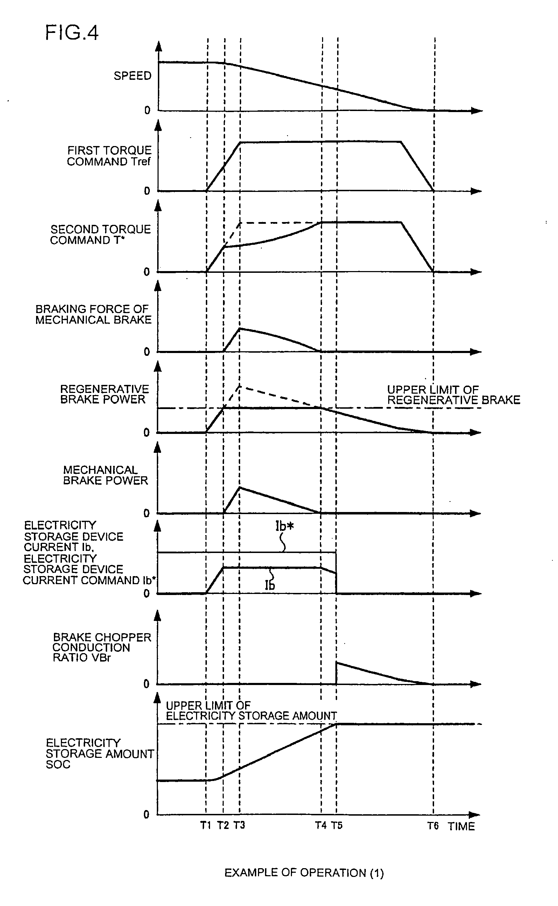

Next, the operation of this example is explained. FIG. 4 shows one example of the operation at the braking time in accordance with the first embodiment of the present invention. In FIG. 4, the abscissa represents time, and the ordinate represents, from the upside, the speed of the vehicle 9, the first torque command Tref, the second torque command T*, the braking force of mechanical brake, the power of regenerative brake, the power of mechanical brake, the electricity storage device current Ib and the electricity storage device current command Ib*, the conduction ratio VBr of brake chopper, and the electricity storage amount SOC.

At first, the vehicle 9 is running, and the electricity storage amount SOC takes a value smaller than the electricity storage amount upper limit. At time T1, the first torque command Tref rises, and the braking of the vehicle 9 starts. When the first torque command Tref rises, the second torque command T* also rises, so that the decrease amount of kinetic energy of the vehicle 9 is made regenerative brake power by the regenerative brake. Since the regenerative brake power flows into the electricity storage device 5 via the inverter 6, the electricity storage device current Ib increases, and the electricity storage amount SOC increases.

At time T2, when the first torque command Tref exceeds the upper limit value of the second torque command T*, the second torque command T* is limited by the upper limit value. At this time, the torque difference $\Delta T$ increases, so that the braking force of mechanical brake is generated. Specifically, since the braking performed by the regenerative brake is limited by the upper limit value of the second torque command T*, the braking force of the regenerative brake becomes in short, and the mechanical brake is operated to compensate this shortage. At time T3, the first torque command Tref becomes constant, and subsequently, as the speed decreases, the second torque command T* increases. Thereby, the braking force of mechanical brake is decreased, and at time T4, the braking force of mechanical brake becomes zero.

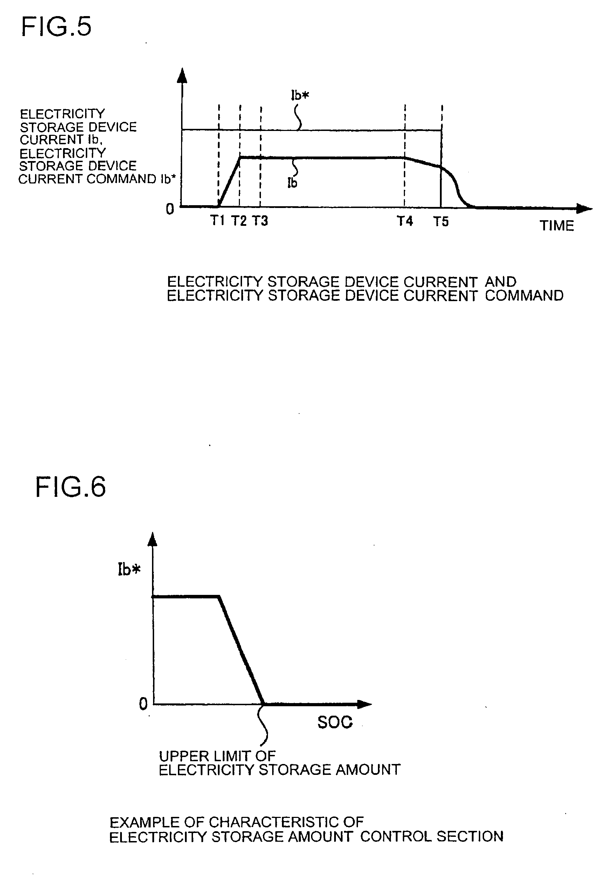

At time T5, when the electricity storage amount SOC reaches the electricity storage amount upper limit, the electricity storage device current command Ib* becomes zero due to the characteristic of the electricity storage amount control section 105. On the other hand, since the electricity storage device current Ib does not decrease immediately, the electricity storage device current difference $\Delta Ib$ becomes negative, so that the conduction ratio VBr calculated by Equation (1) increases. In the brake chopper 4, an electric current flows based on the conduction ratio VBr, and the regenerative brake power is consumed by the resistor 401. Accordingly, the electricity storage device current Ib decreases and becomes zero. FIG. 5 is a graph enlargedly showing the state of the electricity storage device current Ib and the electricity storage device current command Ib* near time T5. After the electricity storage device current command Ib* has become zero in this manner, the current flows to the brake chopper 4 side, by which the electricity storage device current Ib is decreased.

In the case of a configuration in which the conventional brake chopper is absent, in order to restrain the charge to the electricity storage device 5, it is necessary to decrease the second torque command T* and restrain the regenerative brake power. Thereby, the braking force of mechanical brake for compensating the shortage of braking force of regenerative brake is generated, so that the wear of the mechanical brake increases.

As described above, in this example, even in the case where the electricity storage amount SOC of the electricity storage device 5 reaches the electricity storage amount upper limit, braking can be performed without the use of the mechanical brake, so that the wear of the mechanical brake can be restrained. Also, if the conduction ratio VBr increases, control is carried out so that the electricity storage device current Ib decreases and coincides with the electricity storage device current command Ib*. Therefore, the electricity storage amount SOC also does not exceed the electricity storage amount upper limit.

Subsequently, when the regenerative brake power decreases with the decrease in speed, the conduction ratio VBr decreases so that the electricity storage device current Ib coincides with the electricity storage device current command Ib*, and the current of the brake chopper 4 also decreases. Therefore, the power stored in the electricity storage device is not consumed by the brake chopper 4. When the vehicle 9 stops at time T6, the first torque command Tref becomes zero, and the regenerative brake power also becomes zero, so that the conduction ratio VBr also becomes zero.

The electricity storage amount control section 105 may have a characteristic such that the electricity storage device current command Ib* is decreased gradually with respect to the electricity storage amount SOC so that the electricity storage device current command Ib* becomes zero at the electricity storage amount upper limit as shown in FIG. 6. In this case, the electricity storage device current command Ib* decreases from the state in which the electricity storage amount SOC is smaller than the electricity storage amount upper limit, and the electricity storage device current Ib also decreases, so that the electricity storage amount SOC is less prone to exceed the electricity storage amount upper limit.

As described above, according to the first embodiment of the present invention, the regenerative energy caused by the regenerative brake is stored in the electricity storage device 5, by which the regenerative energy can be utilized effectively. Also, even in the case where regenerative energy exceeding the electricity storage amount upper limit of the electricity storage device 5, the regenerative power can be treated by the low-cost brake chopper, so that the mechanical brake need not be used, and the maintenance can be reduced.

Example 2

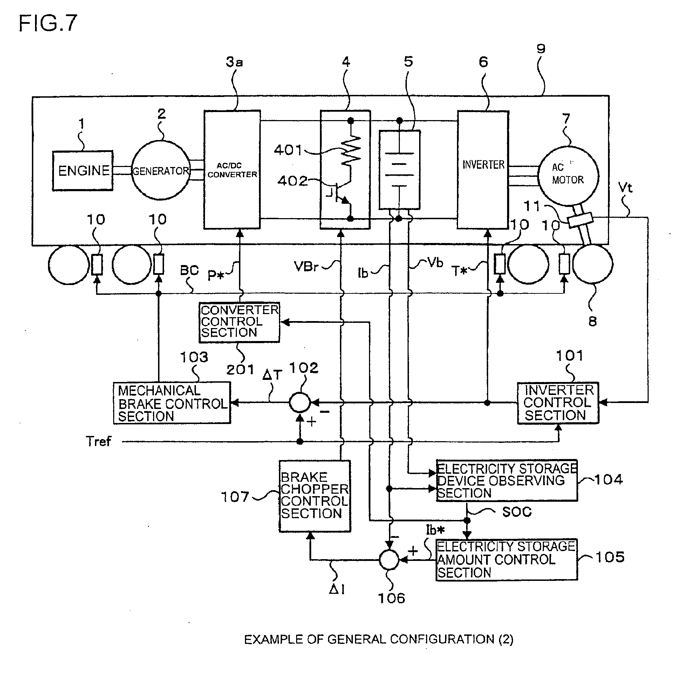

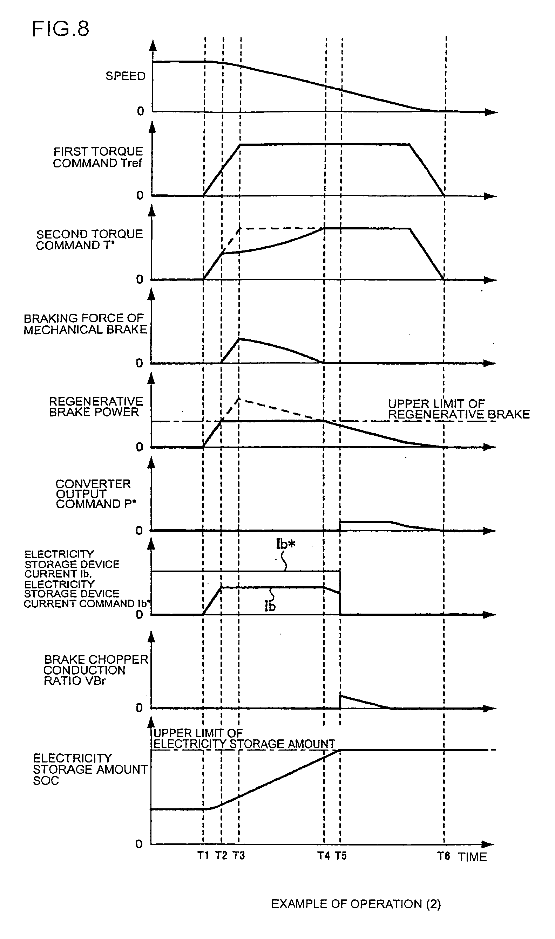

Next, a second embodiment of the present invention is explained with reference to FIGS. 7 and 8. FIG. 7 shows an example of the general configuration in accordance with the second embodiment. The same reference numerals are applied to the same elements as those shown in FIG. 1 explained in the first embodiment, and the detailed explanation thereof is omitted. In FIG. 7, an AC/DC converter 3a is connected to the generator 2, and a converter control section 201 for controlling the AC/DC converter 3a is provided. On the direct current side of the AC/DC converter 3a, the brake chopper 4, the electricity storage device 5, and the inverter 6 are connected in parallel.

The converter control section 201 operates a converter output command P* so that power flows from the direct current side to the alternating current side when the electricity storage amount SOC exceeds the electricity storage amount upper limit in a braked state to control the AC/DC converter 3a. The AC/DC converter 3a converts the alternating current of variable voltage and variable frequency on the generator 2 side and the direct current on the inverter 6 side bidirectionally according to the converter output command P* which is the output of the converter control section 201. That is to say, when the electricity storage amount SOC exceeds the electricity storage amount upper limit in a braked state, the generator 2 is controlled so that electrical energy is converted into mechanical energy, and a state in which the vehicle 9 is braked by the engine brake is formed. At this time, the regenerative energy produced by the ac motor 7 is consumed by the engine 1 via the inverter 6, the AC/DC converter 3a, and the generator 2.

Next, the operation of the second embodiment of the present invention is explained. FIG. 8 shows one example of the operation in accordance with the second embodiment of the present invention. The explanation of the same portions as those in one example of the operation shown in FIG. 4 explained in the first embodiment is omitted. The chart that is the sixth from the upside in FIG. 4 shows the change in the mechanical brake power, while the chart that is the sixth from the upside in FIG. 8 shows the change in the converter output command P*. Before time T5, the converter output command P* is zero, and the operations of other portions are the same as the operations shown in FIG. 4.

When the electricity storage amount SOC reaches the electricity storage amount upper limit at time T5, the electricity storage device current command Ib* becomes zero, and also the converter output command P* increases. Also, a brake chopper conduction ratio command VBr is increased by the electricity storage device current difference ΔIb, which is a difference between the electricity storage device current command Ib* and the electricity storage device current Ib. In this example, however, some of regenerative brake power is consumed by the engine 1 via the AC/DC converter 3a and the generator 2, so that the electricity storage device current Ib decreases as compared with the first embodiment, and the brake chopper conduction ratio command VBr also takes a smaller value than in the first embodiment.

Thereby, the energy consumed by the brake chopper 4 is decreased as compared with the first embodiment, so that the capacity of the brake chopper can be decreased. As in the first embodiment, the regenerative power can be utilized effectively by storing the regenerative power caused by the regenerative brake in the electricity storage device 5, even in the case where the regenerative energy exceeding the electricity storage amount upper limit of the electricity storage device 5 is produced, the regenerative power can be treated by the low-cost brake chopper, and the maintenance can be reduced because the mechanical brake need not be used.

Example 3

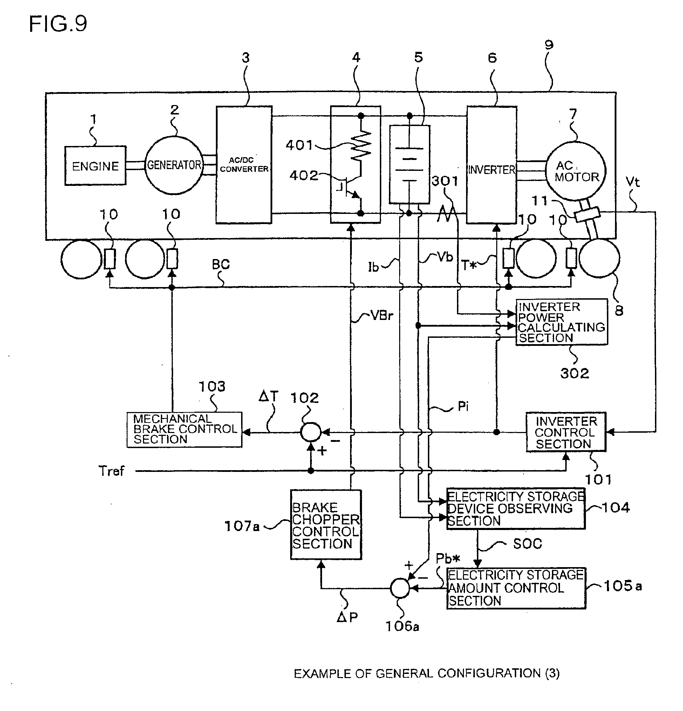

Next, a third embodiment of the present invention is explained with reference to FIGS. 9, 10 and 11. FIG. 9 shows an example of the general configuration in accordance with the third embodiment. The same reference numerals are applied to the same elements as those shown in FIG. 1 explained in the first embodiment, and the detailed explanation thereof is omitted. In this example, there are provided a current detector 301 for detecting an inverter direct current, which is the dc side current of the inverter 6, and an inverter power calculating section 302. The inverter power calculating section 302 calculates inverter power Pi from the product of the inverter direct current detected by the current detector 301 times the electricity storage device voltage Vb. However, in the case where the power is converted from the alternating current side to the direct current side, the sign of the inverter power Pi is made positive.

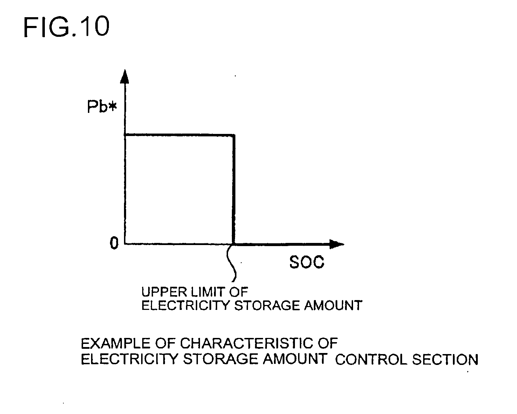

An electricity storage amount control section 105a sends chargeable power Pb* based on the electricity storage amount SOC fed from the electricity storage device observing section 104. In the first embodiment explained with reference to FIG. 1, the output of the electricity storage amount control section 105 is the electricity storage device current command Ib*, while in this example, the output of the electricity storage amount control section 105a is the chargeable power Pb*. The characteristic of the chargeable power Pb* with respect to the electricity storage amount SOC is shown in FIG. 10. In the case where the electricity storage amount SOC is not larger than the electricity storage amount upper limit, the chargeable power Pb* is rated maximum chargeable power of the electricity storage device, and in the case where the electricity storage amount SOC exceeds the electricity storage amount upper limit, the chargeable power Pb* is zero. A subtracter 106a receives the inverter power Pi sent from the inverter power calculating section 302 and the chargeable power Pb* sent from the electricity storage amount control section 105a, and subtracts the chargeable power Pb* from the inverter power Pi to output a power difference ΔP. A brake chopper control section 107a receives the power difference ΔP from the subtracter 106a, and calculates the conduction ratio VBr so that the power difference ΔP and the power consumption of the brake chopper 4 coincide with each other to control the brake chopper 4.

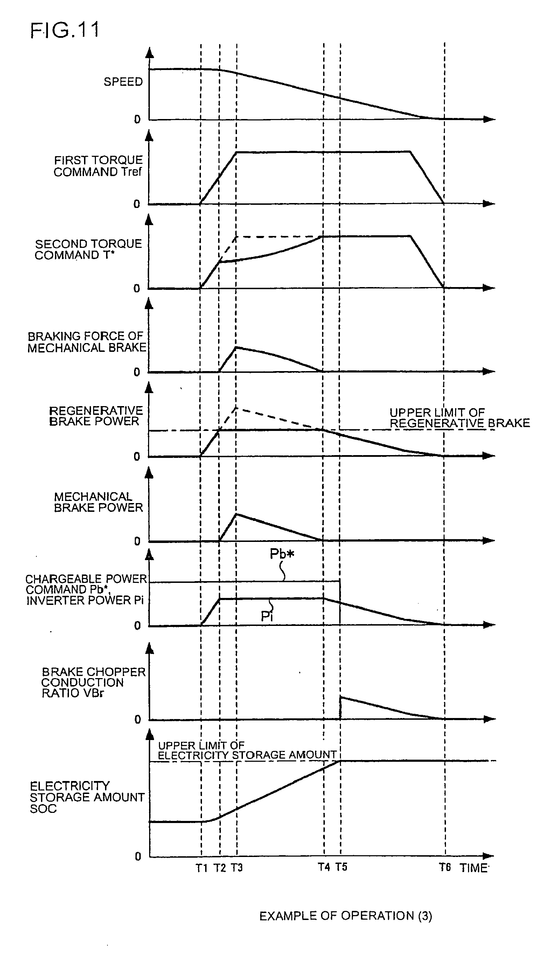

Next, the operation of the third embodiment of the present invention is explained. FIG. 11 shows one example of the operation in accordance with the third embodiment of the present invention. The explanation of the same portions as those in one example of the operation shown in FIG. 4 explained in the first embodiment is omitted. The chart that is the seventh from the upside in FIG. 4 shows the electricity storage device current Ib and the electricity storage device current command Ib*, while the chart that is the seventh from the upside in FIG. 11 shows the chargeable power Pb* and the inverter power Pi. The inverter power Pi is the amount of power obtained by excluding a loss in the inverter 6 from the regenerative brake power, but approximately coincides with the regenerative brake power because the loss in the inverter 6 is smaller than the regenerative brake power.

In FIG. 11, the operation before time T5 is the same as that in FIG. 4. At time T5, when the electricity storage amount SOC reaches the electricity storage amount upper limit, the chargeable power Pb* becomes zero, and therefore the power difference ΔP takes a positive value. As a result, the conduction ratio VBr of the brake chopper 4 increases, and the power consumption of the brake chopper 4 is controlled so as to coincide with the power difference ΔP. As a result, a difference between the inverter power Pi and the power difference ΔP coincides with the chargeable power Pb*, and the amount of power obtained by excluding the power consumption in the brake chopper 4 from the inverter power Pi is charged in the electricity storage device 5. Therefore, the power charged in the electricity storage device 5 coincides with the chargeable power Pb* and becomes zero. Thereby, the electricity storage device 5 is made unchargeable, so that the electricity storage amount SOC is kept constant.

That is to say, according to the third embodiment of the present invention, as in the first embodiment, the regenerative power can be utilized effectively by storing the regenerative power caused by the regenerative brake in the electricity storage device 5. Also, even in the case where the regenerative energy exceeding the electricity storage amount upper limit of the electricity storage device 5 is produced, the regenerative power can be treated by the low-cost brake chopper, and the maintenance can be reduced because the mechanical brake need not be used.

Also, the electricity storage amount control section 105a may have a characteristic such that the chargeable power Pb* is decreased gradually with respect to the electricity storage amount SOC so that the chargeable power Pb* becomes zero at the electricity storage amount upper limit. In this case, the chargeable power Pb* decreases from the state in which the electricity storage amount SOC is smaller than the electricity storage amount upper limit, and the power consumption in the brake chopper 4 also decreases, so that the electricity storage amount SOC is less prone to exceed the electricity storage amount upper limit. Further, in the inverter power calculating section 302, the inverter power Pi is determined from the current and voltage on the direct current side of the inverter 6. However, the inverter power Pi can be calculated by multiplying the current and voltage on the alternating current side of the inverter 6 by the efficiency of the inverter 6. In this case, the detector used for the control of the ac motor 7 can be used.

Example 4

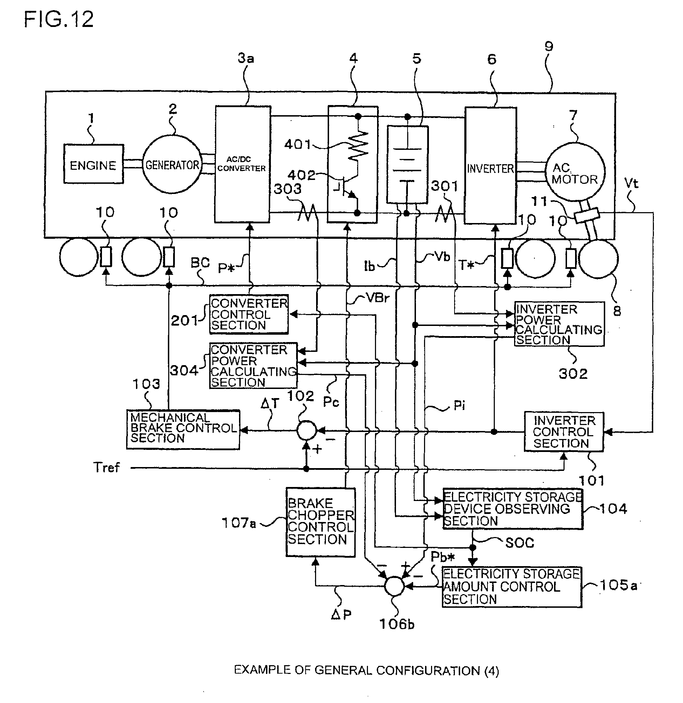

Next, a fourth embodiment of the present invention is explained with reference to FIG. 12. FIG. 12 shows an example of the general configuration in accordance with the fourth embodiment. The same reference numerals are applied to the same elements as those shown in FIG. 9 explained in the third embodiment, and the detailed explanation thereof is omitted. In this example, the AC/DC converter 3a is connected to the generator 2, and there are provided a current detector 303 for detecting a converter direct current, which is the current on the direct current side of the AC/DC converter 3a, a converter power calculating section 304, and the converter control section 201 for controlling the AC/DC converter 3a. The AC/DC converter 3a and the converter control section 201 are equivalent to those explained in the second embodiment. The converter power calculating section 304 calculates converter power Pc from the product of the converter direct current times the electricity storage device voltage Vb. However, in the case where the power is converted from the direct current side to the alternating current side of the AC/DC converter 3a, the sign of the converter power Pc is made positive.

A subtracter 106b receives the inverter power Pi sent from the inverter power calculating section 302, the chargeable power Pb* sent from the electricity storage amount control section 105a, and the converter power Pc sent from the converter power calculating section 304, and subtracts the chargeable power Pb* and the converter power Pc from the inverter power Pi to output the power difference $\Delta P$. The brake chopper control section 107a receives the power difference $\Delta P$ from the subtracter 106b, and calculates the conduction ratio VBr so that the power difference $\Delta P$ and the power consumption of the brake chopper 4 coincide with each other to control the brake chopper 4.

This example differs from third embodiment in that some of the inverter power Pi is consumed by the engine 1 via the AC/DC converter 3a and the generator 2.

Therefore, the power charged in the electricity storage device 5 is the amount of power obtained by excluding the converter power Pc and the power consumption in the brake chopper 4 from the inverter power Pi. Therefore, in the case where the electricity storage amount SOC exceeds the electricity storage upper limit, the power consumption in the brake chopper 4 is controlled so as to be the amount of power obtained by subtracting the chargeable power Pb* and the converter power Pc from the inverter power Pi, by which the power charged in the electricity storage device 5 coincides with the chargeable power Pb*, and becomes zero. Thereby, as in the third embodiment, the electricity storage amount SOC is kept constant. Also, as in the second embodiment, the capacity of the brake chopper 4 can be reduced.

As described above, according to the present invention, an efficient operation can be realized by storing the regenerative energy in the electricity storage device and using it effectively. Further, even in the case where the electricity storage amount of the electricity storage device exceeds the upper limit, the regenerative energy can be consumed by the brake chopper, so that the mechanical brake need not be used, and the maintenance of mechanical brake can be eliminated.

**Claims**

1.  A vehicle control unit mounted on a vehicle that is driven by an ac motor, comprising:

    an engine;
    an ac generator driven by the engine;
    a power converter for converting ac power generated by the ac generator into a direct current;
    an inverter that converts the direct current into an alternating current of variable voltage and variable frequency to drive the ac motor;
    a brake chopper that is connected to the direct current side of the inverter and is formed by a series circuit consisting of a resistor and a switching element; and
    an electricity storage device connected in parallel to the brake chopper on the direct current side of the inverter.

2.  The vehicle control unit according to claim 1, wherein the vehicle control unit further comprises a brake chopper control section for controlling the brake chopper based on the state of the electricity storage device.

3. The vehicle control unit according to claim 1, wherein the vehicle control unit further comprises:

an electricity storage device observing section for monitoring the electricity storage state of the electricity storage device;
an electricity storage amount control section for calculating a chargeable current from the electricity storage state monitored by the electricity storage device observing section; and
a brake chopper control section for controlling the brake chopper so that the current of the electricity storage device coincides with the chargeable current.

4. The vehicle control unit according to claim 1, wherein the vehicle control unit further comprises:

an electricity storage device observing section for monitoring the electricity storage state of the electricity storage device;
an electricity storage amount control section for calculating a chargeable power from the electricity storage state monitored by the electricity storage device observing section;
an inverter power calculating section for calculating a regenerative power of the inverter; and
a brake chopper control section for controlling the brake chopper based on the chargeable power and the regenerative power.

5. The vehicle control unit according to claim 2, wherein the vehicle control unit further comprises:

a converter for converting the ac power generated by the ac generator into dc power on the inverter side and vice versa; and
a converter control section for controlling the converter based on the electricity storage state of the electricity storage device.

6. A vehicle driven by an ac motor, comprising:

an engine;
an ac generator driven by the engine;
a power converter for converting ac power generated by the ac generator into a direct current;
an inverter that converts the direct current into an alternating current of variable voltage and variable frequency to drive the ac motor;
the ac motor for driving the vehicle, to which the output of the inverter is supplied;
a brake chopper that is connected to the direct current side of the inverter and is formed by a series circuit consisting of a resistor and a switching element; and
an electricity storage device connected in parallel to the brake chopper on the direct current side of the inverter.

7. The vehicle according to claim 6,
wherein the vehicle further comprises a brake chopper control section for controlling the brake chopper based on the state of the electricity storage device.

8. A vehicle control method in which

ac power generated by an ac generator that is driven by an engine is converted into a direct current; and
the converted direct current is converted into an alternating current of variable voltage and variable frequency by an inverter, and the converted ac power is supplied to a vehicle-driving ac motor, wherein
a brake chopper formed by a series circuit consisting of a resistor and a switching element and an electricity storage device are connected in parallel to each other on the direct current side of the inverter;
the electricity storage state of the electricity storage device is monitored, and the chargeable current of the electricity storage device is calculated from the electricity storage state; and
the brake chopper is controlled so that the current of the electricity storage device coincides with the chargeable current.

9. The vehicle control method according to claim 8, wherein a regenerative power of the inverter is calculated, and control is carried out so that a power difference obtained by a subtracting chargeable power from the regenerative power coincides with the power consumption in the brake chopper.

10. The vehicle control method according to claim 8, wherein the electricity storage state of the electricity storage device is monitored, and when the electricity storage amount of the electricity storage device exceeds the upper limit, control is carried out so that power flows from the direct current side to the alternating current side of the converter, and also control is carried out so that power is consumed in the brake chopper.

# FIG.1

EXAMPLE OF GENERAL CONFIGURATION (1)

# FIG.2

UPPER LIMIT VALUE OF
SECOND TORQUE COMMAND T*

0

Vt

EXAMPLE OF CHARACTERISTIC OF
SECOND TORQUE COMMAND

# FIG.3

Ib*

0

SOC

UPPER LIMIT OF
ELECTRICITY STORAGE AMOUNT

EXAMPLE OF CHARACTERISTIC OF
ELECTRICITY STORAGE AMOUNT
CONTROL SECTION

## FIG.4

EXAMPLE OF OPERATION (1)

# FIG.5

ELECTRICITY STORAGE DEVICE CURRENT AND
ELECTRICITY STORAGE DEVICE CURRENT COMMAND

# FIG.6

EXAMPLE OF CHARACTERISTIC OF
ELECTRICITY STORAGE AMOUNT CONTROL SECTION

13

EP 1 876 082 A2

# FIG.7

EXAMPLE OF GENERAL CONFIGURATION (2)

# FIG.8

SPEED

0

FIRST TORQUE
COMMAND Tref

0

SECOND TORQUE
COMMAND T*

0

BRAKING FORCE OF
MECHANICAL BRAKE

0

REGENERATIVE
BRAKE POWER
UPPER LIMIT OF
REGENERATIVE BRAKE

0

CONVERTER
OUTPUT
COMMAND P*

0

ELECTRICITY
STORAGE DEVICE
CURRENT Ib,
ELECTRICITY
STORAGE DEVICE
CURRENT COMMAND Ib*

Ib*

Ib

0

BRAKE CHOPPER
CONDUCTION
RATIO VBr

0

UPPER LIMIT OF
ELECTRICITY STORAGE AMOUNT

ELECTRICITY
STORAGE AMOUNT
SOC

0

T1 T2 T3          T4 T5          T6 TIME

EXAMPLE OF OPERATION (2)

# FIG.9

EXAMPLE OF GENERAL CONFIGURATION (3)

# FIG.10

EXAMPLE OF CHARACTERISTIC OF
ELECTRICITY STORAGE AMOUNT CONTROL SECTION

EP 1 876 082 A2

FIG.11

EXAMPLE OF OPERATION (3)

18

# FIG.12

EXAMPLE OF GENERAL CONFIGURATION (4)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003134604 A